# EUROPEAN PATENT APPLICATION

(11) **EP 1 970 253 A2**
(43) Date of publication of application: **17.09.2008**
(21) Application number: 08151982.9
(22) Date of filing: 27.02.2008
(51) Int. Cl.: B60R 7/10

(54) **Vehicle accessory**

(30) Priority: 13.03.2007 SE 0700612
(71) Applicant: Janne Jämsä Produkter, 130 40 Djurhamn (SE)
(72) Inventor: Jämsä, Janne, 1030 40 Djurhamn (SE)
(74) Representative: Örtenblad, Bertil Tore

(57) **Abstract**

The invention is characterized in that the accessory comprises a frame (8) that includes two parallel legs (9,10) tied together at their first end portion with a curved part (11), wherein respective leg (9,10) is arched at its second end portion so that the curved leg part (12,13) partially extends out towards the first end portion and is parallel with the leg, wherein the length of the curved part (12,13) corresponds to the depth of the outer segments (6) in the vehicle's internal ventilator nozzle (1), wherein the distance between the legs (9,10) is less than the width or height of said ventilator nozzle (1), wherein the legs (9,10) are curved at a small distance away from the curved parts (12,13), and wherein the length of the legs (9,10) is sufficient to carry or support said objects.

## Description

The present invention relates to a vehicle accessory in the form of a frame meant for drying objects, such as gloves.

Professional drivers in particular, often exit their vehicles and put on gloves in order to perform a certain task, and then remove the gloves and stow them away when re-entering the vehicle.

A problem that occurs during rainy weather or winter weather is that the gloves become wet or moist when the task is being performed. When the driver discards the gloves inside the vehicle they do not dry. Instead, they keep accumulating moisture each time they are used for tasks outside the vehicle.

The present invention solves this problem.

The present invention thus relates to a vehicle accessory for drying wet objects, such as gloves, mittens, hats and the like,and is characterized in that the accessory comprises a frame with two parallel legs tied together at their first respective end portions with the aid of a curved part, wherein each respective leg is arched at its second end portion so that the curved leg part partially extends out towards respective legs in a direction towards the first end portion and is parallel with said leg, wherein the length of the curved part corresponds to the depth of the outer segments in the vehicle's internal ventilator nozzle, wherein the distance between the legs is less than the width or height of said ventilator nozzle and wherein the legs are curved at a short distance from the curved parts, and wherein the length of the legs is sufficient to carry or support said objects.

The invention is described more in detail below, partially in connection with an embodiment of the invention shown in the accompanying drawings, where
- **Fig. 1** illustrates schematically a front view of a ventilator nozzle in the coupe of a vehicle;
- **Fig. 2** is a schematically cross-sectional view of a ventilator nozzle according to figure 1;
- **Fig. 3** illustrates how the accessory according to the invention is mounted on a ventilator nozzle.
- **Fig. 4** illustrates the accessory according to the invention in a first embodiment;
- **Fig. 5** illustrates the accessory according to the invention in a second embodiment.

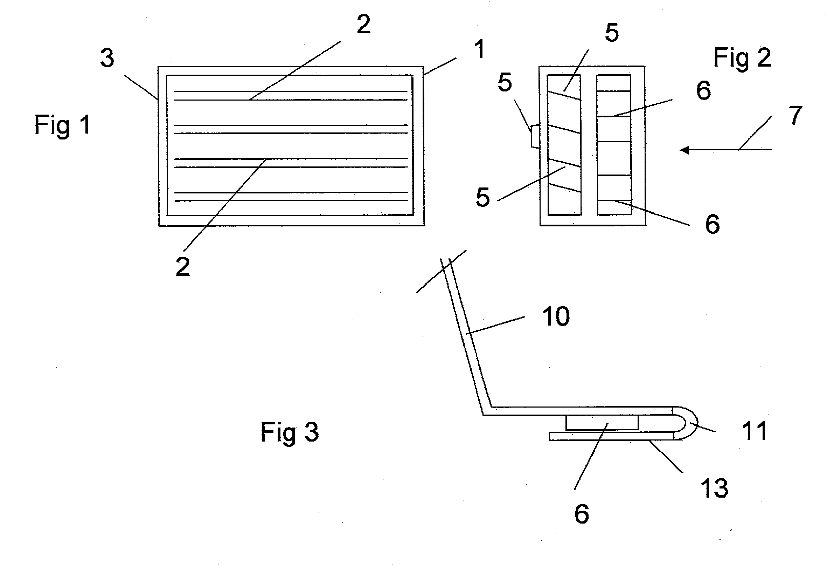

Figure 1 illustrates schematically a front view of a ventilator nozzle 1 located in the coupe of a vehicle. Similar nozzles allow both warm and cold air respectively into the coupe of the vehicle. Such known ventilator nozzles 1 have a number of parallel segments 2. Normally the ventilator nozzle has two sets of such segments, wherein one set is fixed and the other one is movable relative to the frame 3 by means of a button 4 so that the air stream from the ventilator nozzle can be directed according to the preferred choice. There exist nozzles 1 that have the movable segments either in the front or in the rear of the nozzle. There exist also ventilator nozzles that only have movable segments and nozzles with only fixed segments. In figure 2 there is illustrated an embodiment where the foremost segments 5 are movable and the rearmost segments 6 are fixed. The arrow 7 shows the direction of the air stream through the ventilator nozzle inside a vehicle.

There occur assemblies wherein the fixed segments are either horizontally or vertically installed.

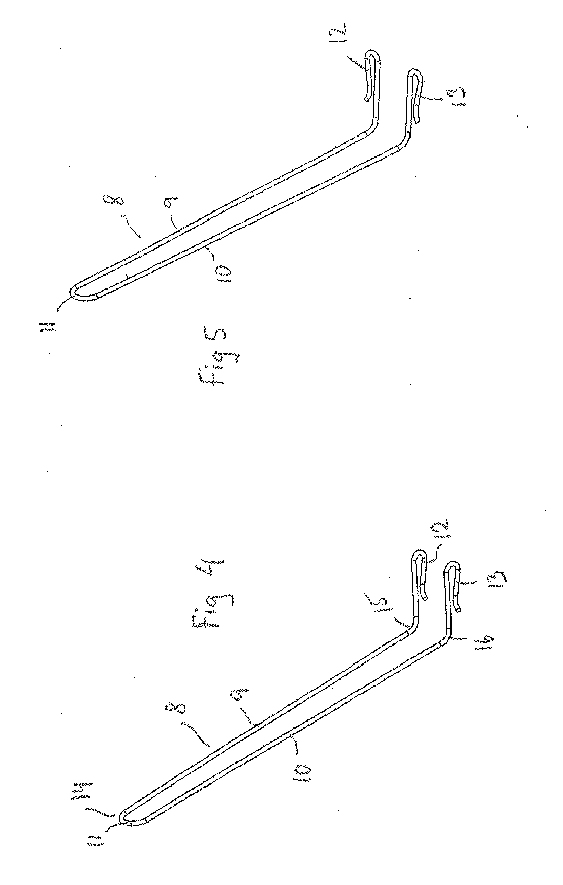

In Figure 4 the accessory comprises according to the invention, a frame 8 that include two parallel legs 9, 10 tied together at their first end portions with a curved part 11. Said respective legs 9, 10 are in their second end portion arched so that the curved leg part 12, 13 extends partially out towards respective leg in a direction towards said first end portion 14 and parallel with the legs 9, 10. The length of the curved part 12, 13 corresponds to the depth of the outer segments 6 in the vehicle's internal ventilator nozzle. The distance between the legs 9, 10 is less than the width or height of said ventilator nozzle 1. The legs 9, 10 are curved at a short distance from the curved parts, at numbers 15, 16. In addition, the length of the legs 9, 10 is sufficient to carry or support said objects.

In figure 3 there is illustrated how the frame 8 is mounted onto a ventilator nozzle 1. The curved parts are inserted into the ventilator nozzle, in between two adjacent segments, so that said curved parts are placed behind the outer segments 6. The height of the curved parts 12, 13 is less than the distance between two adjacent segments in said ventilator nozzle. The frame is inserted so that the legs extend upwards, as illustrated in figure 3. Thereafter the frame is pulled in the opposite direction so that the curved parts 13 appear on the other side of the segment 6 than the leg 10.

The result will be that the frame 8 is firmly placed in an outer segment 6, where the legs are directed diagonally upwards.

An object, such as a glove, can now be threaded onto the upward part of the frame.

It is obvious that a good drying effect is achieved.

According to a previous embodiment the curved part 12, 13 is situated elastically against the corresponding leg 9, 10.

In the case where the outer segments are horizontally arranged, the respective curved leg parts 12, 13 lie on the same plane as the corresponding leg 9, 10. This is illustrated in figure 4.

In the case where the outer segments are vertically arranged, the respective curved leg parts 12, 13 lie on a plane perpendicular to said corresponding leg 9, 10. This is illustrated in figure 5.

It is suggested that the length of the legs are 1 to 2 decimetres.

It is further suggested that the distance between the legs are 1 to 5 centimetres.

According to a preferred embodiment the frame is manufactured from a non-corrosive material.

## Claims

1. A vehicle accessory for drying objects, such as gloves, mittens, hats and the like, **characterized in that** the accessory comprises a frame (8) that includes two parallel legs (9, 10) tied together at their first end portion with a curved part (11), wherein respective leg (9, 10) is arched in its second end portion so that the curved leg part (12, 13) partially extends out towards respective leg (9, 10) in a direction towards said first end portion and parallel with the leg, wherein the length of the curved part (12, 13) corresponds to the depth of the outer segments (6) in the vehicle's internal ventilator nozzle (1), wherein the distance between the legs (9, 10) is less than the width or height of said ventilator nozzle (1), wherein the legs (9, 10) are curved at a short distance from the curved leg parts (12, 13), and wherein the length of the legs (9, 10) is sufficient to carry or support said objects.

2. Accessory according to claim 1, **characterized in that** the curved part (12, 13) is situated elastically against corresponding leg (9, 10).

3. Accessory according to claim 1 or 2, **characterized in that** the respective curved leg parts (12, 13) lie on the same plane as the corresponding leg (9, 10).

4. Accessory according to claim 1 or 2, **characterized in that** the respective curved leg parts (12, 13) lie on a plane perpendicular to the corresponding leg (9, 10).

5. Accessory according to claim 1, 2, 3 or 4, **characterized in that** the length of the legs (9, 10) is 1 to 2 decimetres.

6. Accessory according to claim 1, 2, 3, 4 or 5, **characterized in that** the distance between the legs (9, 10) is 1 to 5 centimetres.

7. Accessory according to claim 1, 2, 3, 4, 5 or 6, **characterized in that** the height of the curved leg parts (12, 13) is less than the distance between two adjacent segments (5, 6) in said ventilator nozzle (1).

8. Accessory according to claim 1, 2, 3, 4, 5, 6 or 7, **characterized in that** the frame (8) is manufactured from a non-corrosive material.
